# EUROPEAN PATENT APPLICATION

(11) **EP 2 036 440 A1**
(43) Date of publication of application: **18.03.2009**
(21) Application number: 07790419.1
(22) Date of filing: 28.06.2007
(51) Int. Cl.: A23F 3/10, A23F 3/16

(54) **METHOD OF ENZYMATICALLY TREATING GREEN TEA LEAVES**

(30) Priority: 30.06.2006 JP 2006182420; 01.12.2006 JP 2006325750
(71) Applicant: Kirin Brewery Company, Ltd., Tokyo 101-8645 (JP)
(72) Inventor: YOTSUMOTO, Yuko, Tokyo 101-8645 (JP)
(74) Representative: HOFFMANN EITLE
(86) International application number: PCT/JP2007/063001
(87) International publication number: WO 2008/001848

(57) **Abstract**

It is to provide a method for producing a rich-flavored green tea extract liquid by converting the ingredients by performing enzymatic treatment to raw material green tea leaves in order to improve the quality of green tea leaves and extracting the tea leaves. A green tea extract liquid with excellent flavor is produced by mixing and allowing to react ground green tea leaves, made by grinding dried green tea leaves or ground green tea leaves which have been ground during green tea manufacture process, with an enzyme solution at a weight ratio of 1 : 0.2 to 1 : 5, and then extracting with water or warm water. By performing enzymatic reaction according to the method of the present invention, the reaction can proceed dramatically, and it is possible to convert effectively the flavor ingredients by an enzymatic treatment of raw material tea leaves, which was difficult in a conventional method, and a rich-flavored green tea extract liquid with an excellent flavor can be produced by extracting the tea leaves.

## Description

### Technical Field

The present invention relates to a method for producing rich flavored-green tea extract liquid with excellent flavor, by allowing to react raw material green tea leaves with an enzyme solution to convert the ingredient, before the extraction thereby to improve the quality of green tea leaves, and extracting the tea leaves.

### Background Art

In the production of green tea extract liquid, many proposals have been made heretofore to cause function of various enzymes during extracting green tea to promote the extraction, thereby to improve the flavor or quality of the extract liquid. However, in such extraction method comprising enzymatic treatment, as the enzymatic treatment is usually conducted during a tea-extraction step, a relatively long treatment time is required for exhibiting the effects of enzymatic treatment. On the other hand, prolonged treatment time leads to quality deterioration during the extraction step, or decrease in production efficiency. Therefore, usually, the enzymatic treatment can be set only for a short time period, and the conventional enzymatic treatment was limited to a certain range such as to promote extraction etc., and the effect had its limit.

For example, Japanese Laid-Open Patent Application No. 2003-210110 describes a method for producing tea extract liquid with low bitterness and astringency, being rich and having brothy taste wherein no sediment(ori) is formed , said method comprising extracting useful ingredients from tea leaves at a low temperature, and effectively in a short time period. Specifically, a method wherein enzymes such as cellulase, hemicellulase and pectinase are used to conduct enzymatic degradation extraction treatment during extracting, to improve extraction efficiency of soluble solid content is shown. In the method for producing tea extract liquid disclosed in the publication, a relatively long enzymatic degradation extraction treatment time is applied. Specifically, an enzymatic degradation extraction treatment of 0.5 to 5 hours is conducted in the method, and in the Examples, the enzymatic degradation extraction treatment is conducted for 2 hours by stirring. This is a much longer time compared to the extraction step when usually producing green tea beverage, and degradation of flavor during extracting, or affect to quality of tea extraction liquid is a concern. Further, as a long time of enzymatic degradation extraction treatment will induce decrease in production efficiency in beverage production factories, the method would not be practically applicable.

The following two methods are proposed as a method for resolving problems of enzymatic degradation extraction treatment in the production of tea extract liquid. The first method is a method conducting enzymatic treatment when producing "green tea extractive", wherein the degree of freedom of the producing method is relatively high, and which extraction time can be set to be long, and wherein the enzymatic treatment is not conducted during the extraction stage in the beverage production step. For example, Japanese Laid-Open Patent Application No. 2003-144049 discloses a method for producing green tea extractive with less astringency, having brothy taste and being rich, by treating green tea with protease and tannase in combination. In this method, enzymatic reaction is performed at the same time as the extraction. In a specific example, the above enzyme is added, and an enzymatic treatment is conducted for 16 hours to perform extraction. The method comprises treating with protease and tannase in combination, to degrade the binding of protein and tannin in tea leaves, and to degrade protein, in order to produce extract having brothy taste and being rich. It is a method that can be applied when producing "green tea extractive" wherein the extraction time can be set to be long.

The other method is a method to extract by using tea leaves to which enzymatic treatment has been performed previously during the tea manufacturing. Japanese Laid-Open Patent Application No. 51-115999 discloses a method for producing dried tea leaves that are possible to be extracted even with cold water, or instant tea powder extracted from the dried tea leaves and dried, comprising performing tannase treatment to raw tea leaves collected and firing the same. Further, Japanese Laid-Open Patent Application No. 5-308901 discloses a method for producing tea leaves possible to be extracted even with water, comprising treating raw tea leaves with cell wall digestive enzymes such as pectinase and cellulase after a steaming step or a pan-firing step, and subjecting the enzymatically treated-tea leaves to normal heating-drying step. Both methods are inventions focusing on promotion of extraction, thereby to improve extraction efficiency wherein extraction with cold water is possible. The effect of the enzymatic treatment is limited, and thus it is not to convert tea-contained ingredient to improve the flavor.

On the other hand, recently, in the method for producing tea, a method for prodding tea with improved taste and flavor, comprising modifying raw material components by using degradative enzymes etc. for tea leaves is disclosed. For example, Japanese Laid-Open Patent Application 2003-153651 proposes a method for converting components in the raw material tea leaves, comprising adding at least one kind of degradative enzyme conducting tannin degradation, polysaccharide degradation and protein degradation to raw tea leaves with much astringency or to dried tea leaves, and performing enzymatic treatment. Specifically, tannase, a tannin-degrading enzyme, gamanase, a polysaccharide-degrading enzyme, and kokulase®, a protein-degrading enzyme are added to raw tea leaves such as green tea being steamed and cooled, or withering oolong-tea raw material tea leaves, to perform enzymatic treatment. It is disclosed that by adding this process to a usual tea manufacturing process, raw material components of the tea leaves are changed, astringency of tea is adjusted, and thus, tea product with sweetness and brothy taste can be produced. However, enzymatic treatment in this tea manufacturing process is limited to spray degradative enzymes to tea leaves, mixing by stirring the resultant in order to degrade tannins, polysaccharides and protein in the raw material ingredients; it is not an enzymatic treatment comprising converting a flavor ingredient in the tea leaves so that tea extract liquid with excellent flavor can be produced.

Patent Reference 1: Japanese Laid-Open Patent Application No. 51-115999
Patent Reference 2: Japanese Laid-Open Patent Application No. 5-308901
Patent Reference 3: Japanese Laid-Open Patent Application No. 2003-144049
Patent Reference 4: Japanese Laid-Open Patent Application No. 2003-153651

### Disclosure of the Invention

### Objectives to be Solved by the Invention

The objective of the present invention is to provide a method for producing a rich-flavored green tea extract liquid having an excellent flavor, comprising reacting the raw material green tea leaves with an enzyme solution to convert the ingredients, modifying the quality of green tea leaves, and extracting the tea leaves. Further, the objective of the present invention is to provide a method of enzymatic treatment that can convert effectively the flavor ingredients of the raw material green tea leaves, to impart rich flavor to the raw material green tea leaves, and thereby to produce a green tea extract liquid characterized by its flavor from the tea leaves.

### Means to solve the Object

The present inventors made a keen study to solve the above problems. They found out that by using ground green tea leaves which are made by grinding dried green tea leaves or ground green tea leaves which have been ground during green tea manufacture process, and by mixing and allowing to react an enzyme solution to the ground green tea leaves under a condition where the water content is strictly limited, specifically at a weight ratio of 1:0.2 to 1:5, that the reaction progresses dramatically. This enzymatic treatment to ground green tea leaves under this particular condition allowed an effective conversion of flavor ingredients of the dried green tea leaves which could not be obtained in a conventional method. Further, by employing this method to modify the quality of green tea leaves, and performing extraction treatment to the tea leaves, it became possible to produce rich-flavored green tea extract liquid having an excellent flavor.

In other words, the method for producing green tea extract liquid of the present invention consists of a method for producing green tea extract liquid having an excellent flavor, comprising mixing and allowing to react ground green tea leaves which are made by grinding dried green tea leaves or which have been ground during green tea manufacture process, with an enzyme solution at a weight ratio of 1:0.2 to 1:5, and then extracting with water or warm water. In the present invention, it is preferred that the grinding level of dried green tea leaves is a grinding level wherein 20 mesh-passing components are 50 weight% or more. Further, in the present invention, it is possible to circulate or store the processed tea leaves after treatment, by sterilizing after filling the tea leaves in a sealed container once dried after the reaction of ground green tea leaves with enzyme solution is completed, or in a wet state. In the present invention, as a particularly excellent enzyme to be used in the reaction of ground green tea leaves with enzyme solution, for converting flavor ingredients of green tea extract liquid, polyphenol oxidase, β-glycosidase, lipase, chlorogenic acid esterase, nuclease, protease, lactase, invertase, pectinase, xylanase, and deaminase can be exemplified.

Specifically, the present invention relates to: (1) a method for producing a green tea extract liquid having an excellent flavor, comprising mixing and reacting ground green tea leaves which is made by grinding dried green tea leaves or which have been ground during green tea manufacture process, with an enzyme solution at a weight ratio of 1 : 0.2 to 1 : 5, and extracting with water or warm water; (2) the method for producing a green tea extract liquid having an excellent flavor according to (1), wherein the weight ratio of the ground green tea leaves and enzyme solution is 1 : 0.2 to 1 : 3; (3) the method for producing a green tea extract liquid having an excellent flavor according to (1) or (2), wherein the amount of the enzyme solution is within a range where water is not separated from the mixture when mixed with green tea leaves; (4) the method for producing a green tea extract liquid having an excellent flavor according to any one of (1) to (3), wherein the grinding level of the dried green tea leaves is a grinding level in which a 20 mesh-passing component is 50 weight % or more; and (5) the method for producing a green tea extract liquid having an excellent flavor according to any one of (1) to (4), comprising mixing and allowing to react the ground tea leaves with an enzyme solution at a weight ratio of 1 : 0.2 to 1 : 5, and then performing heating treatment.

Further, the present invention relates to (6) the method for producing a green tea extract liquid having an excellent flavor according to any one of (1) to (5), wherein the enzyme used in the reaction of the ground tea leaves and enzyme solution is one or more enzymes selected from the group consisting of polyphenol oxidase, β-glycosidase, lipase, chlorogenic acid esterase, nuclease, protease, lactase, invertase, pectinase, xylanase, and deaminase; (7) green tea leaves for preparing rich-flavored green tea extract liquid, prepared by mixing and allowing to react ground green tea leaves which are made by grinding dried green tea leaves or which have been ground during green tea manufacture process, with an enzyme solution at a weight ratio of 1 : 0.2 to 1 : 5, filling the liquid in a sealed container once dried after the reaction, or in a wet state, followed by sterilization; (8) a method for producing green tea extract liquid with excellent flavor comprising extracting the green tea leaves according to (7) with water or warm water; and (9) a green tea beverage filled in a container, prepared by mixing an extract liquid produced by the method for producing green tea extract liquid according to any one of (1) to (6), or by the method for producing green tea extract liquid according to (8), wherein the extract liquid is sterilized and filled directly after being mixed with other beverage raw materials.

### Effect of the Invention

The method for producing green tea extract liquid of the present invention enables to promote reaction of flavor ingredient of raw material green tea leaves with an enzyme solution, and to convert effectively. Further, it provides a method for producing a green tea extract liquid characterized by its flavor originated from the green tea leaves, by enabling conversion of flavor ingredient of raw material green tea leaves after the dried tea leaves stage which was difficult in a conventional method, and imparting rich flavor to raw material green tea leaves. Extract liquid having a new flavor can be produced by the present invention.

### Best Mode of Carrying Out the Invention

The present invention consists of a method for producing green tea extract liquid having an excellent flavor comprising mixing and allowing to react ground tea leaves made by grinding dried green tea leaves or which have been ground during green tea manufacture process, with an enzyme solution at a weight ratio of 1 : 0.2 to 1 : 5, and extracting tea leaves with water or warm water.

The dried green tea leaves used in the method for producing green tea extract liquid of the present invention are usually called as green tea leaves. The dried green tea leaves used in the method of the present invention are enough to be processed to a so-called Ara-cha (crude tea). The water content at that time is approximately 6 weight% or less. In the present invention, the dried green tea leaves are allowed to react with an enzyme solution in a state of ground green tea leaves, being ground. For preparing ground green tea leaves, dried green tea leaves should be ground with a usual grinding machine. Moreover, byproducts of tea manufacturing process called Kona-cha, being ground during the manufacturing process of green tea leaves may be used as ground green tea leaves. The fineness of grinding (grinding level) of the ground green tea leaves is preferred to be a grinding level wherein 20 mesh-passing components are 50 weight% or more (50 to 100 weight%), more preferably 70 weight% or more.

As for the enzyme solution used in the method for producing green tea extract liquid of the present invention, generally, any enzyme may be used, as long as it is an enzyme with which a flavor change of the extract liquid can be confirmed by allowing to react with the tea leaves, and which use is allowed under food sanitation law. Specific examples include enzymes acting on carbohydrate such as amylase, glucoamylase, CGTase, dextaranase, cellulase, glucanase, glucose isomerase, xylanase, hemicellulase, xylanase, mannanase, pectinase, lactase, invertase; enzymes acting on protein/peptide such as protease, peptidase, deaminase, transglutaminase; enzymes acting on lipid such as lipase, esterase; as well as catalase, oxidase, nuclease, glutaminase, etc. Among these, from the point of view of imparting a characteristic flavor, β-glycosidase (WO2003/056930), polyphenol oxidase, lipase, chlorogenic acid esterase, nuclease, protease, lactase, invertase, pectinase, xylanase, and daminase are preferred. It is not necessary to use these enzymes alone, and it may be used by combining 2 or more of them, according to the effect. Further, it may be used in a form of complex enzyme, wherein several types of enzymes are mixed. The amount of enzyme used is not limited as long as an effect is exerted by the reaction. The specific range cannot be categorically determined as it varies significantly according to the activity intensity or the content of excipient in the formulation, while generally, it is about 0.01 weight% to 50 weight%, preferably 0.1 weight% to 10 weight% based on tea leaves.

The reaction with the enzyme solution in the method for producing green tea extract liquid of the present invention is performed under a condition where water content is limited. This is significantly different from a conventional method, where the enzymatic treatment to green tea leaves was performed under a relatively large water amount, as it was intended to extract water at the same time. Specifically, the water amount in the reaction with enzyme solution in the method for producing green tea extract liquid of the present invention is an amount necessary so that the reaction proceeds sufficiently, while the enzyme is dispersed into tea leaves; and an amount so that tea component does not transfer to water, that is, specifically, 0.2 to 5 times of the tea leaves weight (weight ratio enzyme solution and ground green tea leaves being 1:0.2 to 1:5). Herein, the "enzyme solution" of the present invention relates not only to a solution wherein the enzyme is dissolved into water beforehand, but it is also possible to add and mix the enzyme after mixing the tea leaves and water, or to add and mix water after mixing the tea leaves and the enzyme. More specifically, it is not limited as long as an enzyme solution which is 0.2 to 5-folds of tea leaves is finally added.

The upper limit of the preferred enzyme solution amount varies according to the properties of the tea leaves used, while it is preferred that it is "within a range where water does not separate from the mixture" when mixed with the tea leaves. The term "within a range where water does not separate from the mixture" herein, can be defined by the following method. Specifically, the "range where water does not separate" means that the amount of separated water is 5 ml or less, after mixing 10 g of raw material tea leaves with a certain amount of enzyme solution, allowing to stand still the mixture at 50°C for 2 hours, and allowing to stand still the mixture that is spread uniformly on a 200-mesh stainless circular wire mesh (mesh: 75 µm; diameter 75 mm) for 5 min. The method is herein called as "a method for determining separated water". Further, it is preferred that the weight ratio of dried tea leaves to enzyme solution is 1: 3 or less, as the water separation would be less. Moreover, as in an embodiment of the present invention, that is, in a case where the extraction is performed after drying once after the reaction, a lesser amount of water content is preferred from the view point of drying efficiency. Specifically, it is preferred that the weight ratio of tea leaves to enzyme solution is 1 : 2 or less, more preferably 1 : 1 or less. On the other hand, the lower limit of the preferred enzyme solution amount is when the weight is 0.5-fold of tea leaves, and when the level is higher, the reaction with the enzyme solution proceeds more efficiently.

At that time, particularly, when the water amount is low, the water amount of the dried tea leaves which are the raw materials of enzymatic treatment is affecting. 0.2-fold amount of the tea leaves weight in the present invention relates to the ratio where dried tea leaves which water content is 6% or less are used. Therefore, when dried tea leaves with a water content 6% or more is used, the enzyme solution amount may be further reduced, considering the water content corresponding to the exceeding part. It is preferred to perform the enzyme reaction in a sealed environment, so that the water content does not change during the reaction, in order to keep the water content still. Further, in order to control the reaction speed, physical operation such as stirring may be integrated appropriately.

During the enzymatic treatment in the method for producing green tea extract liquid of the present invention, it is preferred to adjust the pH of the enzyme solution, according to the enzyme used. For example, in case of a particular polyphenol oxidase, β-glycosidase, protease, invertase, etc. it is preferred to perform the enzyme reaction under acid conditions. It is preferred as it can suppress the quality degradation during the reaction, when reacting in the copresence of acid substances, such as ascorbic acid, citric acid and lactic acid. As for the other conditions of the enzymatic treatment such as reaction temperature, reaction time, amount of enzyme used etc. in the enzymatic treatment, optimum conditions may be determined appropriately according to the enzyme used. However, the reaction temperature is preferred to be 45°C or higher from the view point of microorganism control, and more preferably 50°C or higher. After the enzyme reaction has completed, it is preferred to inactivate the enzyme according to a known method such as heating, microwave irradiation, from the view point of stabilizing the flavor. Preferred examples of heating treatment include heating at 100°C for 10 to 60 min. Preferably, it is heated at 100°C for 20 to 40 min.

In the method for producing green tea extract liquid of the present invention, extraction is performed according to an extract operation of a usual production of green tea extract liquid. Specifically, extract water of approximately 10 to 50-fold of tea leaves is used. A temperature from ambient temperature to boiling water may be used appropriately. The time may be selected from several minutes to several hours. In case of a short time, it may be used as a preparation of green tea beverage, after a solid solution separation process, such as filtration and centrifugation. When extraction is performed during a relatively long time, it is usually used as a raw material of beverage, as a so-called green tea extractive. When producing green tea beverage directly from the extract liquid, the preparation is prepared according to a common method by mixing the necessary raw materials, sterilizing, and filling into a container such as PET bottle and can for commercialization. On the other hand, when preparing green tea extract, after performing the usual post-treatment step and sterilized, it is filled directly or after being concentrated in a container such as can, for commercialization. In some cases, known drying means such as spray drying and freeze drying may be used for drying and powderizing.

Tea leaves reacted with an enzyme solution may be treated similarly as usual manufactured tea leaves, after reducing the water content to 5 weight% or less by a common method including drying by heating, drying under reduced-pressure, drying in a vacuum, and lyophilization. Moreover, it may be treated similarly by filling into a sealed container such as retort porch and metal can in a wet state, and then sterilizing. In these cases, a mixture of plural enzyme-treated tea leaves each being enzymatically treated may be subjected to extraction, or enzymatically treated tea leaves may be used by mixing an appropriate amount to usual green tea leaves. It is an advantageous point of the present invention that it is possible to design freely the flavor of the extract liquid by combining the enzymatically treated tea leaves.

In the present invention, as the reaction with the enzyme solution proceeds dramatically, a reaction that is sufficient for converting flavor ingredient can be achieved. Further, as the reaction is performed during a process different from the extraction operation, extract of green tea extract liquid can be performed regardless of the reaction conditions for the enzyme solution, and thus green tea extract liquid with rich flavor can be obtained.

In the following, the present invention will be explained in detail by referring to the examples, while the technical scope of the invention will not be limited by these exemplifications.

### Example

### [Example 1, Comparative Example 1]

### (Example 1)

20 g of ion exchange water supplemented with 100 mg of polyphenol oxidase (Laccase Daiwa Y 120 ; Daiwa Kasei) and 300 mg of vitamin C was mixed well with 10 g of Ara-cha (crude tea) ground so that 20 mesh-passing components become 80 weight% or more. The mixture was wrapped to avoid water evaporation and allowed to stand still at 35°C for 12 hours.

### (Comparative Example 1)

A mixture prepared similarly as Example 1, except that enzyme was not added, was left still at 35°C for 12 hours.
A mixture of tea leaves and enzyme solution prepared similarly was determined to have a preferred range of water content by the method for determining separated water.

These treated tea leaves were put into an oven at 100°C for 30 min, to inactivate enzyme and sterilize at the same time, and proceeded tea leaves were obtained. The proceeded tea leaves were put into 300 ml of hot water of 70°C, and extracted for 6 min by stirring a few times. After performing solid-liquid separation, the obtained extract liquid was adjusted with vitamin C and sodium bicarbonate, to prepare 1000 g of green tea beverage of pH6.5. The prepared green tea beverage was subjected to sensory estimation by 7 panelists. As a result, the beverage of Example 1 had a flavor which was significantly better than that of Comparative Example 1, and a gorgeous and sweet flavor was strongly observed.

### [Comparative Example 2 to 6]

### (Comparative Example 2):

10 g of Ara-cha (crude tea) used in Example 1 was used without grinding, and was extracted for 6 min with hot water of 70°C with a weight ratio of 30-fold. Filtration was performed to remove tea leaves, and green tea extract liquid was obtained. This extract liquid was adjusted to 300 ml, and 100 mg of polyphenol oxidase, 300 mg of vitamin C were added and then the resultant was left still at 35°C for 12 hours.

### (Comparative Example 3):

Extract liquid prepared exactly in the same manner as Comparative Example 2 was left still at 55°C for 30 min.

### (Comparative Example 4):

Extract liquid prepared exactly in the same manner as Comparative Example 2 was left still at 55°C for 2 hours.

### (Comparative Example 5):

Extract liquid prepared exactly in the same manner as the above Comparative Examples except that enzyme was not added was left still at 35°C for 12 hours.

### (Comparative Example 6):

Extract liquid prepared exactly in the same manner as Example 1, except that tea leaves were not ground, was allowed to react with an enzyme solution, to obtain green tea beverage.

### (Estimation)

Vitamin C and sodium bicarbonate were used to each extract liquid of Comparative Examples 2 to 5 to prepare green tea beverage so that pH becomes 6.5 and usage ratio of tea leaves becomes 1%, and sensory evaluation was performed together with the green tea beverage of Comparative Example 6. Comparing with Comparative Example 5, to which enzyme was not added, flavor change was observed for Comparative Example 2. However, quality of the flavor was much worse compared to that of Example 1, and sweetness that was observed for Example 1, was almost not observed. Similar tendency was observed for Comparative Examples 3 and 4, in which reaction time was shortened. As it is clear from these results, even an extract liquid is enzymatically treated, extract liquid with an excellent flavor such as the one obtained in Example 1 cannot be obtained. Further, for Comparative Example 6, flavor change was less, and the quality of flavor was bad. It was shown that it is indispensable to ground tea leaves to obtain rich flavor by converting flavor ingredients.

### [Example 2; Comparative Example 7]

Green tea beverage of Example 2 and Comparative Example 7 were obtained exactly in the same manner as Example 1 and Comparative Example 1, except that tea leaves for the raw material were replaced by Sen-cha ground until 20 mesh-passing components become 80 weight% or more. A mixture of tea leaves and enzyme solution prepared similarly was determined to have a preferred range of water content by the method for determining separated water.

### (Estimation)

As a result of estimation, similar results as Example 1 and Comparative Example 1 were obtained. However, the effects of Example 1 had a higher estimation compared to Example 2, as the sweetness was more sophisticated than Example 2.

### (Example 3, 4, 5; Comparative Example 8)

### (Example 3; Comparative Example 8)

Green tea beverage of Example 3 and Comparative Example 8 were obtained exactly in the same manner as Example 1, and Comparative Example 1 except that Kona-cha of Sen-cha leaves (90 weight% or more of 20 mesh-passing component), and enzyme was replaced by β-glycosidase (Amano Enzyme). A mixture of tea leaves and enzyme solution prepared similarly was determined to have a preferred range of water content by the method for determining separated water.

### (Example 4; Example 5)

Further, green tea beverages of Examples 4 and 5 were obtained by not adding ascorbic acid, or changing to an equal amount of citric acid.

### (Estimation)

These resultants were subjected to estimation test. Compared to Comparative Example 8, a flower-like flavor with fresh green feeling, and pleasant cooling sensation was strongly observed for Example 3. As for Example 4, that tendency was lower, while for Example 5, synthetic and chemical flavor due to strong flavor was disappeared and had a pleasant flavor and very favorable.

### [Examples 6, 7; Comparative Example 9]

### (Examples 6, 7; and Comparative Example 9)

Examples 6, 7 and Comparative 9 were obtained in the same manner as Examples 3, 4 and Comparative Example 8 except that the reaction was performed at 55°C for 4 hours.

### (Estimation)

Similar flavor tendency was observed as Examples 3, 4 and Comparative Example 8. However, the quality of flavor was more pleasant and sophisticated compared to that of Examples 3, 4 and Comparative Example 8.

### [Examples 8 to 13; Comparative Example 10]

20 g of ion exchange water with or without 150 mg of each enzyme shown in Table 1 was well mixed with 10 g of ground Sen-cha (60 weight% or more of 20 mesh-passing component). The mixture was wrapped to avoid water evaporation and allowed to stand still at 35°C for 12 hours. A mixture of tea leaves and enzyme solution prepared similarly was determined to have a preferred range of water content by the method for determining separated water. These treated tea leaves were allowed to rest in an oven at 100°C for 20 min to inactivate enzyme, and to sterilize at the same time, to obtain processed tea leaves. Processed tea leaves were put into 300 ml of hot water of 75°C, and extracted for 4 min by stirring a few times. After performing solid-liquid separation, the obtained extract liquid was adjusted by using vitamin C and sodium bicarbonate to prepare 1000 g of green tea beverage of pH 6.5. Sensory estimation was performed by 7 panelists.

**[Table 1]**

| | | |
|---|---|---|
| Example 8 | Lipase (AY "Amano 30 G) | Strong green flavor like curcubitaceae |
| Example 9 | Xylanase (hemicellulase "Amano" 90) | Enhanced brothy taste and body |
| Example 10 | Pectinase (pectinase G "Amano") | Strong floral flavor and brothy taste |
| Example 11 | chlorogenic acid esterase (Kikkoman) | Strong sharp green flavor |
| Example 12 | Nuclease (Nuclease "Amano" G) | Strong sweetness, and brothy taste |
| Example 13 | Deaminase (Deamizyme G) | Strong young green flavor |
| Comparative Example 10 | No enzyme added | Weak flavor; not bodied |

### [Examples 14 to 16; Comparative Example 11]

### (Examples 14, 15 and 16)

20 g of ion exchange water with or without 50 mg, 100 mg, and 200 mg of β-glycosidase (Amano Enzyme) was well mixed with 10 g of ground Sen-cha (70 weight% or more of 20 mesh-passing component). The mixture was wrapped to avoid water evaporation and allowed to rest at 40°C for 8 hours. A mixture of tea leaves and enzyme solution prepared similarly was determined to have a preferred range of water content by the method for determining separated water. These treated tea leaves were allowed to rest in an oven at 100°C for 10 min to inactivate enzyme, and to sterilize at the same time, to obtain processed tea leaves. The resultant was dried in a vacuum dryer, to obtain dried processed tea leaves (water content 3% or less). These dried processed tea leaves were put into 300 ml of hot water of 60°C, and extracted for 10 min by stirring a few times. After performing solid-liquid separation, the obtained extract liquid was adjusted by using vitamin C and sodium bicarbonate to prepare 1000 g of green tea beverage of pH 6.5. Further, the resultant was filled in a container (bottle) and retort sterilized, according to a common method, to prepare Examples 14 to 16, which are container-filled beverage.
(Comparative Example 11): Comparative Example 11 was prepared exactly in the same manner, except that enzyme was not added.

### (Estimation)

The above mentioned container-filled beverages of Examples 14 to 16, and Comparative Example 11 were subjected to sensory estimation. While flat and weak flavor was observed for Comparative Example 11, floral green gorgeous flavor was observed in the Examples. Its strength increased as the enzyme amount increases. Flavor difference was sufficiently observed even in Example 14, in which enzyme amount is the fewest. Extract operation was performed after drying once the processed tea leaves, and even after filling the extract liquid in a container and performing sterilization, the effect of the present invention was fully exerted.

### [Example 17; Comparative Example 12]

### (Example 17)

20 g of enzyme solution to which 500 mg of lactase (Lactase F "Amano") and 300 mg of vitamin C were dissolved was added to 10 g of dried tea leaves wherein 20 mesh-passing components are 90 weight% or more, and the resultant was allowed to rest at 60°C for 18 hours. A mixture of tea leaves and enzyme solution prepared similarly was determined to have a preferred range of water content by the method for determining separated water.
After the reaction, the resultant was heated at 100°C for 20 min to obtain reacted tea leaves. These treated tea leaves were put into 300 ml of hot water of 80°C, and extracted for 10 min by stirring a few times. After separating tea leaves, vitamin C and sodium bicarbonate were used to obtain 1000 g of green tea beverage of pH 6.5 of Example 17. (Comparative Example 12): Comparative Example 12 was prepared exactly in the same manner except that enzyme was not added:

### (Estimation)

Sweet flavor was noticeable in Example 17 compared to Comparative Example 12, gorgeous and fruity flavor was observed, which was highly estimated.

### [Example 18; Comparative Example 13]

### (Example 18)

Green tea extract liquid of Example 18 was obtained exactly in the same manner except that enzyme was changed to 250 mg of invertase (Sumizyme INV), and that the reaction temperature was changed to 50°C.

### (Comparative Example 13)

Comparative Example 13 was prepared exactly in the same manner except that enzyme was not added.

Example 18 showed flower-like flavor, being sharp and crisp compared to Comparative Example 13. Blue and natural flavor like that of Muscat was observed and was favorable.

### [Examples 19 to 22; Comparative Examples 14 to 19]

20 g of enzyme solution to which various protease was added, was added and mixed well with 10 g of Sen-cha wherein 20 mesh-passing components are 80 weight% or more, and allowed to react at 50°C for 15 hours. A mixture of tea leaves and enzyme solution prepared similarly was determined to have a preferred range of water content by the method for determining separated water. When 150 mg of protease M "Amano" G was used as protease (Example 19), 300 mg of vitamin C was dissolved at the same time. When 150 mg of protease N "Amano" G (Example 20), 150 mg of Thermoase Y320 (Daiwa Kasei) (Example 21) and 300 mg of Pantidase NP-2 (Yakult Pharmaceuticals) (Example 22) were used, no vitamin C was added. After the reaction, for those in which enzyme solution with no vitamin C was used, 300 mg of vitamin C was added in a form of powder to each liquid. Further, heating treatment was performed at 100°C for 20 min.

### (Comparative Examples 14, 15, 16, and 17)

Comparative Examples 14 to 17 were prepared exactly in the same manner as Examples 19 to 22, except that tea leaves that were not ground were used.

### (Comparative Example 18)

Comparative Example 18 was prepared exactly in the same manner as the above, except that enzyme was not added.

These treated tea leaves were put in 300 ml of hot water of 80°C, and extracted for 10 min by stirring a few times. After separating the tea leaves, vitamin C and sodium bicarbonate were used for the obtained extract liquid, to prepare 1000 g of green tea beverage of Examples 19 to 22, and Comparative Examples 14 to 18 of pH 6.5.

### (Comparative Example 19)

10 g of Sen-cha used in Examples 19 to 22, were put into 300 ml of hot water of 80°C being ungrounded, and extracted for 10 min by stirring a few times. Tea leaves were removed and the resultant was adjusted again to 300 ml. 150 mg of Protease M "Amano" G and 300 mg of vitamin C were added, and allowed to stand still for 15 hours at 50°C. After the reaction, vitamin C and sodium bicarbonate were used to prepare 1000 g of green tea beverage of pH 6.5.

### (Estimation Example)

Examples 19 to 22 to which grounded tea leaves were used, had a much stronger taste and richness, compared to Comparative Examples 14 to 17, in which non-grounded Sen-cha was used. For Comparative Examples 14 to 17, flavor deterioration was observed compared to Examples 19 to 22. Further, browning of tea leaves was progressed, and there were problems also from the point of view of liquid color, when a beverage was prepared. Almost no taste or richness was observed in Comparative Example 19, wherein enzyme was added to extract liquid, and there was a problem that flavor degradation was observed during the reaction.

### [Examples 23 to 32; Comparative Examples 20 to 24]

Enzyme solutions comprising 100 mg of protease (Protease M "Amano" G or invertase (Sumizyme INV 200 mg) and 300 mg of vitamin C were prepared with various liquid amounts. Each solution was added and mixed with 10 g of dried tea leaves (water content 5 weight %) wherein 20 mesh-passing components are 90 weight % or more, respectively, and allowed to react at 50°C for 15 hours. A mixture of tea leaves and enzyme solution prepared similarly was determined to have a preferred range of water content by the method for determining separated water. After the reaction, heat treatment was performed at 100°C for 20 min. These treated tea leaves were put into 300 ml of hot water of 80°C, and extracted for 10 min by stirring a few times. After separating the tea leaves, vitamin C and sodium bicarbonate were added to the obtained extract liquid, to prepare 1000 g of green tea beverage of pH 6.5. Further, Comparative Examples were prepared exactly in the same manner, except that enzyme was not added and the solution amount was made to be 15 g.

### (Estimation)

Estimation results for protease and invertase are shown in Tables 2 and 3, respectively. As for protease, the reaction progress was estimated by using strength of richness as an index. In Table 2, richness estimation is shown with the following index: "-": not felt; "±": almost not felt; "+": felt; "++": strongly felt; "+++": very strongly felt. Further, for invertase, the reaction progress was estimated by using strength of flower-like flavor as an index. In Table 3, the strength of flower-like flavor is shown with the following index: flower-like estimation "-": not felt; "±": almost not felt; "+": felt; "++": strongly felt; "+++": very strongly felt.

**[Table 2]**

| | Enzyme (protease) solution amount (weight ratio based on tea leaves) | Rich taste |
|---|---|---|
| Comparative Example 20 | 0 g (0 fold) | - |
| Comparative Example 21 | 1 g (0.1 fold) | - |
| Example 23 | 2.5 g (0.25 fold) | ++ |
| Example 24 | 5 g (0.5 fold) | +++ |
| Example 25 | 10 g (1 fold) | +++ |
| Example 26 | 20 g (2 fold) | ++ |
| Example 27 | 30 g (3 fold) | ++ |
| Comparative Example 22 | Enzyme not added 15 g (1.5 fold) | - |

**[Table 3]**

| | Enzyme (invertase) solution amount (weight ratio based on tea leaves) | Flower-like flavor |
|---|---|---|
| Comparative Example 23 | 0 g (0 fold) | - |
| Example 28 | 5 g (0.5 fold) | + |
| Example 29 | 7.5 g (0.75 fold) | ++ |
| Example 30 | 10 g (1 fold) | ++ |
| Example 31 | 20 g (2 fold) | +++ |
| Example 32 | 30 g (3 fold) | +++ |
| Comparative Example 24 | Enzyme not added 15 g (1.5 fold) | - |

### [Examples 33, 34; Comparative Example 25]

40 g of enzyme solution comprising 200 mg of protease M "Amano" and 600 mg of vitamin C dissolved into water was mixed with 20 g of ground Sen-cha wherein 20 mesh components are 70 weight % or more, and the resultant was allowed to react at 50°C for 15 hours. A mixture of tea leaves and enzyme solution prepared similarly was determined to have a preferred range of water content by the method for determining separated water. Tea leaves after reaction were filled into cawpack retort pauch NACF-101 by removing air and tightly sealed, and retort sterilization was performed at 121°C for 20 min. By using the total amount of tea leaves after sterilization, extraction was performed with 600 g of hot water of 80°C for 5 min, and cooled after removing the tea leaves. The resultant was diluted so that the tea leaves usage rate becomes 1%, and adjusted to pH 6.5 with vitamin C and sodium bicarbonate. Further, it was filled into a bottle container, retort sterilization was performed to prepare green tea beverage of Example 33. Beverages of Examples 34 and Comparative Example 25 were prepared exactly in the same manner except that enzyme was changed to 300 mg of β-glycosidase, and that enzyme was not used at all.

### (Estimation)

Strong taste and rich taste absent in Comparative Example 25 were observed in Example 33, to which protease treatment was performed. Gorgeous flavor was observed in Example 34 to which β-glycosidase treatment was performed. Effect was maintained even by performing retort sterilization to the treated tea leaves in a wet state.

### [Examples 35 to 48; Comparative Examples 26 and 27]

Various enzymes were used to investigate the relationship between enzyme solution amount based on tea leaves (ratio), "method for determining separated water" and flavor. As for the method for determining separated water, 10 g of Sen-cha grounded tea leaves (20 mesh pass: 80 weight% or more; hereinafter referred to as A) and Ara-cha (crude tea) grounded tea leaves (20 mesh pass: 90 weight% or more; hereinafter referred to as B) were added with different water contents and enzyme types and the reaction was performed at 50°C for 15 hours. Results of method for determining separated water for the similarly prepared tea leaves-enzyme solution mixtures are shown in Table 4. In the Table, "○" shows the Examples of the present invention, "x" shows the Comparative Examples in the method for determining separated water.

After the reaction, heat treatment was performed at 100°C for 20 min. These treated tea leaves were put into 300 ml of hot water of 80°C, and extracted for 10 min by stirring a few times. After separating the tea leaves, vitamin C and sodium bicarbonate were used to the obtained extract liquid, to prepare 1000 g of green tea beverage of pH 6.5. From the sensory estimation, the size of enzyme reaction was estimated. The results are shown in Table 4.

**[Table 4]**

| | Tea leaves | Enzyme solution amount (weight ratio based on tea leaves) | Enzyme (vitamin C used in combination) | Results of method for determining separated water | Sensory estimation (rich taste for protease; Flower-like flavor for β-glycosidase) |
|---|---|---|---|---|---|
| Ex. 35 | A | 20 g (2 fold) | Protease M "Amano" G 100 mg (vitamin C 300 mg) | ○ | +++ |
| Ex. 36 | A | 30 g (3 fold) | | ○ | ++ |
| Ex. 37 | A | 40 g (4 fold) | | ○ | + |
| Ex. 38 | A | 50 g (5 fold) | | ○ | + |
| Comp. Ex. 26 | A | 60 g (6 fold) | | × | - |
| Ex. 39 | A | 20 g (2 fold) | β-glycosidase (Amano enzyme) 25 mg (Vitamin C 300 mg) | ○ | +++ |
| Ex. 40 | A | 30 g (3 fold) | | ○ | +++ |
| Ex. 41 | A | 40 g (4 fold) | | ○ | ++ |
| Ex. 42 | A | 50 g (5 fold) | | ○ | + |
| Comp. Ex. 27 | A | 60 g (6 fold) | | × | ± |
| Ex. 43 | B | 20 g (2 fold) | Protease M "Amano" G 100 mg (vitamin C 300 mg) | ○ | +++ |
| Ex. 44 | B | 30 g (3 fold) | | ○ | ++ |
| Ex. 45 | B | 40 g (4 fold) | | ○ | + |
| Ex. 46 | B | 20 g (2 fold) | β- glycosidase (Amano enzyme) 25 mg (Vitamin C 300 mg) | ○ | +++ |
| Ex. 47 | B | 30 g (3 fold) | | ○ | ++ |
| Ex. 48 | B | 40 g (4 fold) | | ○ | + |

### [Example 49; Comparative Example 28]

20 g of enzyme solution to which 20 mg of protease (protease M "Amano" G), 100 mg of invertase (Sumizyme INV), and 300 mg of vitamin C were dissolved, was mixed with 10 g of grounded Kuki-cha (twig tea) (20 mesh pass components: 60 weight% or more), and the resultant was allowed to react at 50°C for 4 hours. Similarly prepared mixture of tea leaves-enzyme solution was determined to be within preferred range of water content by method for determining separated water. After the reaction, the resultant was heated at 100°C for 10 min to obtain reacted tea leaves. After separating the tea leaves, vitamin C and sodium bicarbonate were used to obtained extract liquid to prepare 1000 g of green tea beverages of pH 6.5 of Example 49. Comparative Example 28 was prepared exactly in the same manner except that enzyme was not added.

### (Results)

Example 49 showed strong and rich flavor with green feeling and fruity flavor compared to Comparative Example 28, and was favorable.

### [Example 50; Comparative Example 29]

20 g of enzyme solution in which 100 mg of protease (protease M "Amano" G) and 300 g of vitamin C were dissolved, was mixed with 10 g of grounded roasted tea (Hoji-cha) (20 mesh pass component : 60 weight% or more), and the resultant was allowed to react at 50°C for 6 hours. A mixture of tea leaves and enzyme solution prepared similarly was determined to have a preferred range of water content by the method for determining separated water. After the reaction, the resultant was heated at 100°C for 20 min to obtain reacted tea leaves. These reacted tea leaves were put into 400 ml of warm water of 75°C and extracted for 6 min by stirring a few times. After separating the tea leaves, vitamin C and sodium bicarbonate were used to the obtained extract liquid to prepare 1000 g of green tea beverage of Example 50 of pH 6.5.
Comparative Example 29 was prepared exactly in the same manner except that enzyme was not added.

### (Results)

Example 50 had a more profound taste compared to Comparative Example 29, and was preferable Hoji-cha with strong taste.

## Claims

1. A method for producing a green tea extract liquid having an excellent flavor, comprising mixing and reacting ground green tea leaves which are made by grinding dried green tea leaves or which have been ground during green tea manufacture process, with an enzyme solution at a weight ratio of 1 : 0.2 to 1 : 5, and extracting with water or warm water.

2. The method for producing a green tea extract liquid having an excellent flavor according to claim 1, wherein the weight ratio of the ground green tea leaves and enzyme solution is 1 : 0.2 to 1 : 3.

3. The method for producing a green tea extract liquid having an excellent flavor according to claim 1 or 2, wherein the amount of the enzyme solution is within a range where water is not separated from the mixture when mixed with green tea leaves.

4. The method for producing a green tea extract liquid having an excellent flavor according to any one of claims 1 to 3, wherein the grinding level of the dried green tea leaves is a grinding level in which a 20 mesh pass component is 50 weight % or more.

5. The method for producing a green tea extract liquid having an excellent flavor according to any one of claims 1 to 4, comprising mixing and allowing to react the ground tea leaves with an enzyme solution at a weight ratio of 1 : 0.2 to 1 : 5, and then performing heating treatment.

6. The method for producing a green tea extract liquid having an excellent flavor according to any one of claims 1 to 5, wherein the enzyme used in the reaction of the ground tea leaves and enzyme solution is one or more enzymes selected from the group consisting of polyphenol oxidase, β-glycosidase, lipase, chlorogenic acid esterase, nuclease, protease, lactase, invertase, pectinase, xylanase, and deaminase.

7. Green tea leaves for preparing rich-flavored green tea extract liquid, prepared by mixing and allowing to react ground green tea leaves which are made by grinding dried green tea leaves or which have been ground during green tea manufacture process, with an enzyme solution at a weight ratio of 1 : 0.2 to 1 : 5, filling the liquid in a sealed container once dried after the reaction, or in a wet state, followed by sterilization.

8. A method for producing green tea extract liquid with excellent flavor comprising extracting the green tea leaves according to claim 7 with water or warm water.

9. A green tea beverage filled in a container, prepared by mixing an extract liquid produced by the method for producing green tea extract liquid according to any one of claims 1 to 6, or by the method for producing green tea extract liquid according to claim 8, wherein the extract liquid is sterilized and filled directly after being mixed with other beverage raw materials.
